# EUROPÄISCHE PATENTSCHRIFT

(11) **EP 0 660 106 B1**
(45) Veröffentlichungstag und Bekanntmachung des Hinweises auf die Patenterteilung: **01.04.1998**
(21) Anmeldenummer: 94113205.2
(22) Anmeldetag: 24.08.1994
(51) Int. Cl.: G01N 21/25, G01N 21/85

(54) **Vorrichtung mit einem Spektralphotometer und Lichtleitern**
Device with spectrophotometer and optical fibers
Dispositif avec spectrophotomètre et fibres optiques

(30) Priorität: 22.12.1993 DE 4343872
(43) Veröffentlichungstag der Anmeldung: 28.06.1995
(73) Patentinhaber: Hellma GmbH & Co. KG Glastechnische-optische Werkstätten, D-79379 Müllheim (DE)
(72) Erfinder: Mayer, Peter, D-79379 Müllheim (DE)
(74) Vertreter: Patent- und Rechtsanwaltssozietät, Schmitt, Maucher & Börjes

(56) Entgegenhaltungen:
- DE-A- 4 116 431
- PATENT ABSTRACTS OF JAPAN vol. 11, no. 66 (P-552) (2513) 27. Februar 1987 & JP-A-61 228 331 (HITACHI) 11. Oktober 1986
- CHEMIETECHNIK, Bd.23, Nr.4, April 1994, HEIDELBERG DE Seiten 28 - 30 EMMRICH ET AL. 'LICHTBLICK FÜR DIE PHOTOMETRIE'

## Beschreibung

Die Erfindung betrifft eine Vorrichtung mit Lichtleitern zum Führen des zur Analyse eines flüssigen Mediums dienenden Lichtes von einem Spektralphotometer zu einer externen Meßstelle und von dieser wieder zurück zu dem Detektor des Spektralphotometers und mit Anschlüssen für diese Lichtleiter an dem Spektralphotometer.

Es ist bekannt, das Licht, sei es sichtbares oder evtl. auch unsichtbares Licht, eines Spektralphotometers über Lichtleiter zu einer externen Meßstelle zu führen und dann nach der Meßstelle wieder zu dem Detektor des Spektralphotometers zurückzuführen. Dort kann die Veränderung des Lichtes, die an der Meßstelle durch das dort befindliche Medium hervorgerufen wird, ausgewertet werden. Dies erfordert bisher spezielle Spektralphotometer, die entsprechende Anschlüsse für die Lichtleiter im Bereich der Lichtquelle einerseits und im Bereich des Detektors andererseits haben.

Aus US-44 03 861 ist es bekannt, das Meßlicht direkt durch eine Küvette zu führen oder über Lichtleiter zu einer entfernten Küvette zu leiten. Auch dies erfordert einen erheblichen apparativen Aufwand.

Aus JP-60-219 525 (A) ist es bekannt, Lichtleiter mittels einer steckerartigen Vorrichtung an ein Spektralphotometer anzuschließen.

Es sind ferner Spektralphotometer bekannt, bei denen die Meßstelle innerhalb des Gerätes in einem entsprechend bemessenen Aufnahmeschacht vorgesehen ist, in welchen Aufnahmeschacht eine Meßküvette paßt und einsetzbar ist. Diese Spektralphotometer sind jedoch nicht dazu geeignet, an einer entfernten Meßstelle eine Messung durchzuführen, indem das Licht zu der Meßstelle hin geschickt und das von dort zurückkommende Licht analysiert wird. Es ist vielmehr erforderlich, die zu untersuchende Flüssigkeit mittels einer Meßküvette unmittelbar in das Spektralphotometer einzubringen.

Der Erfindung liegt die Aufgabe zugrunde, eine Vorrichtung der eingangs erwähnten Art zu schaffen, die es ermöglicht, ein Spektralphotometer mit einem Aufnahmeschacht für Küvetten für Messungen an entfernten Meßstellen geeignet zu machen.

Die Lösung dieser scheinbar widersprüchlichen Aufgabe besteht darin, daß die Vorrichtung die Außenabmessungen einer in das Spektralphotometer passend einsetzbaren, von dem Licht beauschlagbaren Küvette und eine in ihrem Inneren angeordnete Lichtumlenkung sowie die Anschlüsse für die Lichtleiter aufweist und daß sich die Lichtumlenkungen an der Stelle dieser Vorrichtung befinden, an welcher bei üblichen Küvetten Eintritts- und Austrittsfenster für das zur Messung dienende Licht vorgesehen sind, wobei die erste Lichtumlenkung das von dem Spektralphotometer eingestrahlte Licht zu dem ersten Lichtleiter umlenkt, der zu der Meßstelle führt, und die zweite Lichtumlenkung das in einem zweiten Lichtleiter von der Meßstelle zurückkommende Licht zu dem Detektor des Spektralphotometers umlenkt.

Da die erfindungsgemäße Vorrichtung die Außenabmessungen einer Küvette hat, die in dem Meßschacht beziehungsweise die Küvettenaufnahme des Spektralphotometers paßt, kann sie in ein solches Spektralphotometer eingesetzt werden, welches normalerweise zur Aufnahme solcher Meßküvetten dient, wobei aber dennoch Messungen an entfernter Stelle über Lichtleiter durchgeführt werden können, ohne daß an dem Spektralphotometer selbst Umbauten oder spezielle Anschlüsse für die Lichtleitungen vorgesehen werden müssen. Es ist also für spektralphotometrische Messungen an Flüssigkeiten in größerer Entfernung zu dem Spektralphotometer kein spezielles und entsprechend aufwendiges Spektralphotometer erforderlich, sondern es ist möglich, jedes beliebige Spektralphotometer zu verwenden, indem die erfindungsgemäße Vorrichtung anstelle der Meßküvette eingesetzt wird. In vorteilhafter Weise kann also an einem solchen üblichen Spektralphotometer auch eine über zwei Lichtleiter gekoppelte, als Meßvorrichtung dienende Tauchsonde angeschlossen werden, die entfernt von dem Meßgerät in ein offenes Gewässer, ein Gefäß, eine Rohrleitung oder dergleichen eingeführt werden kann. Dabei ist die erfindungsgemäße Vorrichtung in vorteilhafter Weise relativ preiswert und vor allem sehr einfach zu handhaben, da sie lediglich anstelle einer Meßküvette in den entsprechenden Aufnahmeschacht eingeführt werden muß.

Zweckmäßig ist es, wenn die Vorrichtung aus Glas besteht und im Bereich des Eintrittsfensters ein erstes Umlenkprisma oder ein Umlenkspiegel zu einem rechtwinklig zum Lichteintritt stehenden Schacht oder Kanal für einen ersten Lichtleiter und parallel dazu einen weiteren Lichtleiter mit einem an dessen Mündung angeordneten zweiten Umlenkprisma oder Umlenkspiegel hat, welchem ein Austrittsfenster für das Licht gegenüberliegt. Die Vorrichtung kann also ähnlich wie eine Küvette gestaltet sein und aus Glas bestehen, wobei anstelle von Zuführleitungen und Abführleitungen zu einem Meßkanal entsprechende Kanäle zur Aufnahme der Lichtleiter vorgesehen sind, während im Bereich der sonst üblichen Meßstrecke die Umlenkungen für das Licht einerseits zu dem ersten Lichtleiter und andererseits zu dem zweiten, das Licht wieder zurückführenden Lichtleiter vorgesehen sind, so daß das für die Messung erforderliche Licht in die Vorrichtung in gleicher Weise eintritt wie bei einer Meßküvette und nach Durchlaufen der Lichtleiter und der Meßstrecke dann wieder an derselben Stelle aus der Vorrichtung austritt, wie dies auch bei einer Küvette der Fall ist, also genau in den Detektor des Photometers geleitet wird.

Die Verwendung von Prismen zur Umlenkung des Lichtes hat dabei gegenüber den Spiegeln den Vorteil, daß bei unter 45° auf die Prismafläche fallendem Lichtstrahl und dahinter angeordnetem Luftraum eine Totalreflexion ermöglicht wird, also praktisch kein Lichtverlust auftritt.

Eine Ausgestaltung der Erfindung zur Vermeidung von Meßfehlern und Lichtverlusten kann darin bestehen, daß zwischen den beiden Lichtumlenkungen eine optische Trennwand, insbesondere ein geschwärztes Glas eingefügt, vorzugeweise eingeschmolzen ist. Dadurch werden Lichteintritt und Lichtaustritt an der erfindungsgemäßen Vorrichtung vollständig voneinander getrennt. Auch dies vermeidet Lichtverluste und verhindert Meßfehler am Detektor.

Insgesamt ergibt sich eine Vorrichtung, die wie ein Stecker in einen Aufnahmeschacht eines üblichen Photometers anstelle einer Küvette eingefügt werden kann und dadurch Anschlüsse von Lichtleitern ermöglicht, mit denen eine Messung an einer von dem Photometer entfernten Meßstelle problemlos durchgeführt werden können. Somit können schon vorhandene Photometer problemlos unter Zuhilfenahme der erfindungsgemäßen Vorrichtung für solche entfernten Messungen verwendet werden.

Nachstehend sind Ausführungsbeispiele der Erfindung anhand der Zeichnung näher beschrieben.

Es zeigt in zum Teil schematisierter Darstellung:
- Fig. 1: eine erfindungsgemäße Vorrichtung, die in einen an sich für Küvetten bestimmten Aufnahmeschacht eines Photometers eingefügt ist und Anschlüsse für Lichtleitungen aufweist, an welchen derartige Lichtleitungen angeschlossen und zu einer entfernten Meßstelle geführt sind, wobei die Austrittsöffnung des einen Lichtleiters mit der Eintrittsöffnung des zweiten Lichtleiters fluchtet und zwischen diesen beiden Lichtleitern eine Meßstrecke in Form eines Meßgefäßes, einer Meßküvette oder dergleichen angeordnet ist,
- Fig. 2: eine der Fig. 1 entsprechende Darstellung, wobei die beiden Lichtleiter mit einer Tauchsonde verbunden sind, die selbst die Meßstrecke aufweist, wobei die beiden Lichtleiter innerhalb der Tauchsonde parallel zueinander laufen und das Licht von dem einen zu dem anderen Lichtleiter zweimal um 90° umgeleitet und dann durch die Meßstrecke zu dem abführenden Lichtleiter geführt ist,
- Fig.3: eine Ansicht einer erfindungsgemäßen, steckerartigen Vorrichtung, die in den Aufnahmeschacht eines Photometers paßt, in Richtung des Lichteintrittes,
- Fig.4: einen Längsschnitt der Vorrichtung gemäß der Schnittlinie IV:IV in Fig. 3 sowie
- Fig.5: eine Draufsicht der Vorrichtung gemäß Fig. 3 und 4.

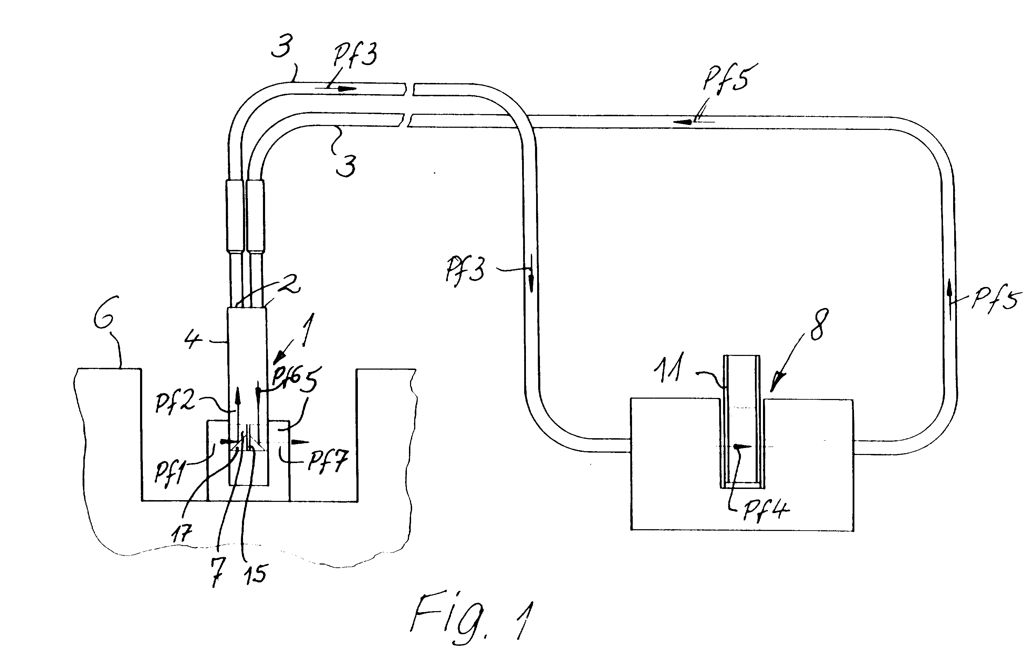

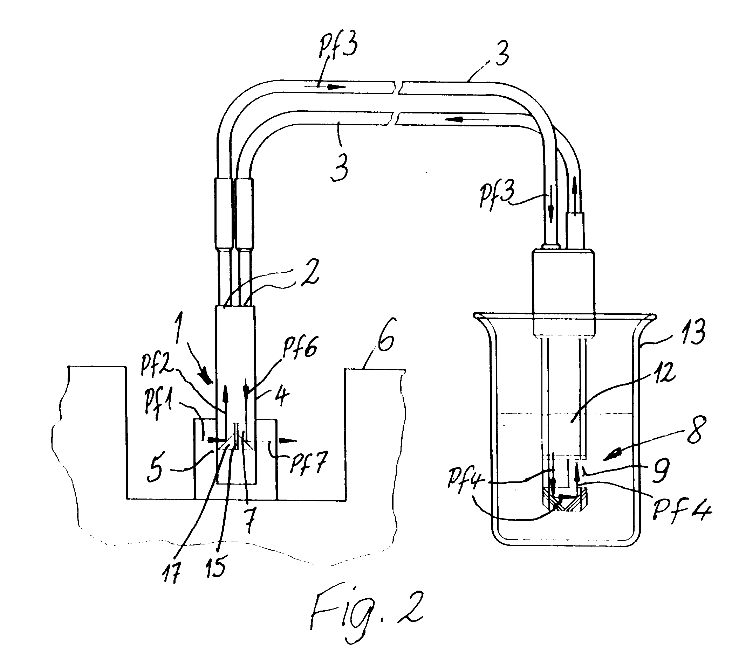

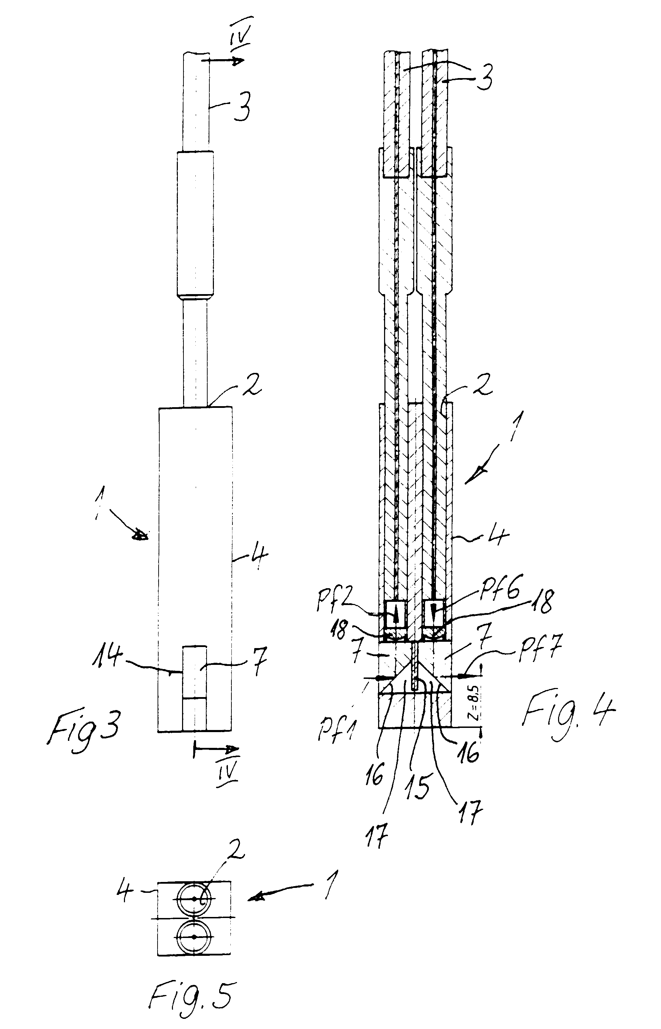

Eine im ganzen mit 1 bezeichnete Vorrichtung weist Anschlüsse 2 für Lichtleiter 3 auf, wobei diese Anschlüsse gemäß Fig. 4 als in das Innere eines Gehäuses 4 eingearbeitete, parallele Kanäle oder Eintrittsöffnungen gestaltet sind, was man vor allem durch gemeinsame Betrachtungen der Figuren 4 und 5 erkennt. Diese Vorrichtung 1 hat die Außenabmessungen einer Meßküvette oder dergleichen, die in einen Aufnahmeschacht 5 eines nur teilweise in Fig. 1 und 2 angedeuteten Spektralphotometers 6 paßt, d.h. anstelle einer üblicherweise in dieses Photometer 6 eingesetzten Küvette kann die Vorrichtung 1 in diesen Aufnahmeschacht 5 eingefügt werden.

Im Inneren der Vorrichtung 1 befinden sich zwei als Prismen 7 ausgebildete Lichtumlenkungen, wobei die erste Lichtumlenkung das von dem Spektralphotometer gemäß dem Pfeil Pf1 eingestrahlte Licht zu dem ersten Lichtleiter 3 umlenkt, der zu einer entfernten, im ganzen mit 8 bezeichneten Meßstelle führt, während die zweite Lichtumlenkung das von der Meßstelle 8 zurückkommende Licht zu dem Detektor des Spektralphotometers umlenkt. Der Verlauf des Lichtstrahles an der ersten Umlenkung ist durch die Pfeile Pf1 und Pf2, der weitere Verlauf durch den Lichtleiter durch die Pfeile Pf3, der Durchgang durch die Meßstelle 8 durch den Pfeil Pf4 und das zurückgeführte Licht durch die Pfeile Pf5 in Fig. 1 und 2 angedeutet. Bei dem Ausführungsbeispiel nach Fig. 2 findet an der Meßstelle 8 eine zweifache Lichtumlenkung statt, weshalb dort insgesamt drei Pfeile Pf4 zu sehen sind, wobei der letzte Pfeil Pf4 die eigentliche Meßstrecke 9 durchläuft.

Das zurückkommende Licht wird dann gemäß dem Pfeil Pf6 auf ein Umlenkprisma 7 geleitet und dort rechtwinklig gemäß dem Pfeil Pf7 abgegeben, so daß das Licht dann - wie bereits erwähnt zu einem Detektor es Spektralphotometers 6 gelangt.

Die Prismen 7 mit ihren Lichtumlenkungen sind dabei an der Stelle der Vorrichtung 1 angeordnet, an welcher bei sonst in das Photometer 6 einsetzbaren Küvetten Eintritts- und Austrittsfenster für das zur Messung dienende Licht vorgesehen sind. Somit wird an der Messung oder Auswertung im Spektralphotometer selbst nichts geändert, trotzdem aber erreicht, daß die Meßstelle 8 in größerer Entfernung von dem Spektralphotometer 6 vorgesehen werden kann, ohne daß dieses Photometer 6 in spezieller Weise umgerüstet werden muß. Es genügt, die erfindungsgemäße Vorrichtung 1 ähnlich wie eine Küvette oder einen Stecker mit entsprechenden Lichtleiteranschlüssen in den Aufnahmeschacht 5 des Photometers 6 einzuführen und erforderlichenfalls zu fixieren, zum Beispiel einzuklemmen.

Während beim Ausführungsbeispiel nach Fig. 1 die beiden Lichtleiter 3 im Bereich der Meßstelle 8 miteinander fluchten und das Licht zwischen ihnen durch ein Meßgefäß 11 hindurchgeführt wird, sind die Lichtleiter 3 beim Ausführungsbeispiel 2 mit einer Tauchsonde 12 verbunden, innerhalb welcher das Licht gemäß den Pfeilen Pf4 zweimal um je 90° von dem einen Lichtleiter zu dem anderen umgelenkt wird und nach der zweiten Umlenkung die Meßstrecke 9 durchläuft. In diesem Falle kann also an der entfernten Meßstelle 8 die Tauchsonde 12 in ein Gefäß 13 oder evtl. auch ein offenes Gewässer, eine Rohrleitung oder dergleichen eingefügt oder eingetaucht werden. Dennoch kann ein handelsübliches Photometer 6 verwendet werden, um die Veränderungen des Lichtes in der Meßstrecke 9 zu detektieren oder zu analysieren, da die Lichtleiter mit der steckerartigen Vorrichtung 1 verbunden sind, die an Stelle der Küvette in das Photometer 6 eingesteckt werden kann.

Die Vorrichtung 1 besteht zweckmäßigerweise aus Glas und hat im Bereich des Eintrittsfensters 14 das erste Umlenkprisma 7, wodurch das Licht rechtwinklig zu dem Schacht oder Kanal für den ersten Lichtleiter 3 umgelenkt wird. Parallel dazu ist in einem weiteren Schacht oder dergleichen Anschluß 2 der zweite Lichtleiter angeordnet, an dessen Mündung das schon erwähnte zweite Umlenkprisma 7 vorgesehen ist, welches ein Austrittsfenster für das Licht bildet, wie das Eintrittsfenster 14 ebenfalls von einer Fläche des Prismas 7 gebildet ist.

Zwischen beiden Prismen 7 ist gemäß Fig. 4 eine optische Trennwand 15 vorgesehen, die aus schwarzem Glas bestehen kann und vorzugsweise eingeschmolzen ist. Dadurch werden die beiden Lichtbahnen vollständig voneinander getrennt, obwohl der eintretende Lichtstrahl gemäß dem Pfeil Pf1 mit dem austretenden Lichtstrahl gemäß dem Pfeil Pf7 fluchtet.

Man erkennt noch, daß an den zur Umlenkung des Lichtes dienenden Schrägflächen 16 der Prismen 7 jeweils ein Luftraum 17 vorgesehen ist, so daß eine Totalreflexion des Lichtes erreicht wird. Am Eintritt in den Lichtleiter 3 beziehungsweise am Austritt des zweiten Lichtleiters 3 sind jeweils Sammellinsen 18 für eine gute Bündelung des Lichtstrahles vorgesehen.

Normalerweise kann mit dem Photometer 6 eine Messung an einer Küvette durchgeführt werden, die in den Aufnahmeschacht 5 eingesetzt wird. Soll jedoch an einer entfernten Meßstelle 8 eine entsprechende photometrische Untersuchung gemacht werden, kann statt einer solchen Küvette die erfindungsgemäße Vorrichtung 1 in den Meßschacht 5 eingeführt werden, wonach die Messung in genau derselben Weise wie an einer Küvette erfolgen kann. Es ist also mit einem konventionellen üblichen und häufig schon vorhandenen Spektralphotometer 6 nunmehr eine Messung auch dann möglich, wenn die Meßstelle 8 eine größere Entfernung zu dem Photometer 6 hat und nur über Lichtleiter 3 erreicht werden kann. Aufwendige Umbauten an dem Spektrometer 6 sind dabei nicht erforderlich.

Die Vorrichtung 1 ermöglicht es, mit einem üblichen Spektralphotometer 6, welches einen Aufnahmeschacht oder dergleichen zum Einstecken einer Meßküvette hat, Messungen in größerer Entfernung durchzuführen, indem die Vorrichtung die Außenabmessungen einer solchen Küvette hat und somit in den Aufnahmeschacht 5 des Photometers 6 paßt. In der Vorrichtung 1 sind Lichtumlenkungen in Form von Prismen 7 oder Spiegeln vorgesehen, wodurch zunächst das einfallende Licht zu einem ersten Lichtleiter umgelenkt wird, der zu einer entfernten Meßstelle 8 führt. Das über einen zweiten Lichtleiter zurückgeführte Licht wird dann wiederum innerhalb der Vorrichtung 1 durch eine zweite Umlenkung in Form eines Prismas 7 oder eines Spiegels erneut umgelenkt und tritt an der Stelle aus, an der auch bei der Meßküvette das durch diese hindurchgeführte Licht zu einem Detektor hin austritt.

Durch entsprechende Wahl der einzelnen Teile und ihre Zuordnung ist es möglich, das Außenmaß des Querschnittes der Vorrichtung 1 auf das einer Standard-Küvette zu begrenzen, bei einer 10mm-Küvette also auf 12,5mm mal 12,5mm.

## Patentansprüche

1. Vorrichtung (1) mit Lichtleitern (3) zum Führen des zur Analyse eines flüssigen Mediums dienenden Lichtes von einem Spektralphotometer (6) oder dergleichen zu einer externen Meßstelle (8) und von dieser wieder zurück zu dem Detektor des Spektralphotometers (6) und mit Anschlüssen (2) für diese Lichtleiter (3) an dem Spektralphotometer (6), **dadurch gekennzeichnet**, daß die Vorrichtung (1) die Außenabmessungen einer in den Spektralphotometer (6) passend einsetzbaren, von dem Licht beaufschlagbaren Küvette und eine in ihrem Inneren angeordnete Lichtumlenkung sowie die Anschlüsse (2) für die Lichtleiter (3) aufweist und daß sich die Lichtumlenkungen an der Stelle dieser Vorrichtung (1) befinden, an welcher bei üblichen Küvetten Eintritts- und Austrittsfenster für das zu Messung dienende Licht vorgesehen sind, wobei die erste Lichtumlenkung das von dem Spektralphotometer (6) eingestrahlte Licht zu dem ersten Lichtleiter (3) umlenkt, der zu der Meßstelle (8) führt, und die zweite Lichtumlenkung das in einem zweiten Lichtleiter (3) von der Meßstelle (8) zurückkommende Licht zu dem Detektor des Spektralphotometers (6) umlenkt.

2. Vorrichtung nach Anspruch 1, dadurch gekennzeichnet, daß sie aus Glas besteht und im Bereich des Eintrittsfensters ein erstes Umlenkprisma (7) oder einen Umlenkspiegel zu einem rechtwinklig zum Lichteintritt stehenden Schacht oder Kanal für einen ersten Lichtleiter (3) und parallel dazu den weiteren Lichtleiter (3) mit einem an dessen Mündung angeordneten zweiten Umlenkprisma (7) oder Umlenkspiegel hat, welchem ein Austrittsfenster für das Licht gegenüberliegt oder dieses Fenster bildet.

3. Vorrichtung nach Anspruch 1 oder 2, dadurch gekennzeichnet, daß zwischen den beiden Lichtumlenkungen eine optische Trennwand (15), insbesondere ein geschwärztes Glas eingefügt, vorzugsweise eingeschmolzen ist.

4. Vorrichtung nach einem der vorstehenden Ansprüche, dadurch gekennzeichnet, daß das Außenmaß des Querschnittes der Vorrichtung (1) dem einer Standard-Küvette entspricht und insbesondere 12,5mm mal 12,5mm beträgt.

## Claims

1. A device (1) including optical fibers (3) for conducting the light serving for analysis of a liquid medium from a spectrophotometer (6) or the like to an external measuring point (8) and back from the latter to the detector of the spectrophotometer (6), and further including connections (2) for said optical fibers (3) on the spectrophotometer (6), **characterized in that** the device (1) has the external dimensions of a cell which is adapted to be inserted in a fitting fashion into the spectrophotometer (6) and to receive the light, and further has a light deviation arranged therein as well as the connections (2) for the optical fibers (3), and that the light deviations are situated at that location of said device (1) at which with normal cells there are entrance windows and exit windows provided for the light serving for measurement, whereby the first light deviation deviates the light irradiated from the spectrophotometer (6) to the first optical fiber (3) leading to the measuring point (8), and the second light deviation deviates the light returning in a second optical fiber (3) from the measuring point (8) to the detector of the spectrophotometer (6).

2. A device as claimed in claim 1, characterized in that the device consists of glass and in the region of the entrance window has a first deviating prism (7) or deviating mirror to a well or channel which serves for a first optical fiber (3) and is situated at right angles to the entrance of light, and parallel to said optical fiber the device has the further optical fiber (3) and arranged at the end thereof a second deviating prism (7) or deviating mirror which is opposed by an exit window for the light or composes said window.

3. A device as claimed in claim 1 or claim 2, characterized in that an optical partition (15), particularly blackened glass is inserted, preferably sealed in, between the two light deviations.

4. A device as claimed in any one of the preceding claims, characterized in that the overall size of the cross section of the device (1) corresponds to that of a standard cell and in particular is 12.5 mm by 12.5 mm.

## Revendications

1. Dispositif (1), avec des fibres optiques (3) pour diriger d'un spectrophotomètre (6) ou analogue vers un lieu de mesure externe (8) la lumière servant à analyser un milieu liquide, et la ramener de là au détecteur du spectrophotomètre (6), et avec des connexions (2) pour ces fibres optiques (3) sur le spectrophotomètre (6), **caractérisé** en ce que le dispositif (1) présente les dimensions extérieures d'une cuvette pouvant être insérée en adaptation dans le spectrophotomètre (6) et pouvant être sollicitée par la lumière, et présente un déviateur de lumière disposé à l'intérieur ainsi que les connexions (2) pour les fibres optiques (3), et en ce que les déviateurs de lumière se trouvent à l'endroit du dispositif (1) où sont prévues, dans des cuvettes habituelles, des fenêtres d'entrée et de sortie pour la lumière servant à la mesure, le premier déviateur de lumière déviant la lumière irradiée par le spectrophotomètre (6) vers la première fibre optique (3), qui mène au lieu de mesure (8), et le second déviateur de lumière déviant la lumière, revenant du lieu de mesure (8) dans une seconde fibre optique (3), vers le détecteur du spectrophotomètre (6).

2. Dispositif selon la revendication 1, **caractérisé** en ce qu'il est réalisé en verre et possède, dans la région de la fenêtre d'entrée, un premier prisme de déviation (7) ou un miroir de déviation vers un puits ou canal, perpendiculaire à l'entrée de lumière, pour une première fibre optique (3) et, parallèlement à cela, l'autre fibre optique (3) avec un second prisme de déviation (7) ou miroir de déviation disposé à son embouchure, qui fait face à une fenêtre de sortie pour la lumière ou constitue cette fenêtre.

3. Dispositif selon la revendication 1 ou 2, **caractérisé** en ce qu'une cloison de séparation optique (15), notamment un verre noirci, est insérée entre les deux déviateurs de lumière, de préférence incorporée par fusion.

4. Dispositif selon une des revendications précédentes, **caractérisé** en ce que les dimensions extérieures de la section du dispositif (1) correspondent à celles d'une cuvette standard, et sont notamment égales à 12,5 mm x 12,5 mm.
